Europäisches Patentamt

European Patent Office

Office européen des brevets

(19)

(11) Veröffentlichungsnummer: **0 256 236**
**B1**

(12) **EUROPÄISCHE PATENTSCHRIFT**

(45) Veröffentlichungstag der Patentschrift: **25.04.90**

(21) Anmeldenummer: **87108221.0**

(22) Anmeldetag: **06.06.87**

(51) Int. Cl.⁵: **H 01 M 4/60,** H 01 M 4/04,
H 01 M 10/36, C 25 B 3/10,
C 08 G 61/12

(54) **Verfahren zur Herstellung von elektrisch leitfähigen organischen Polymerverbindungen als Elektrodenmaterialien für wiederaufladbare galvanische Elemente in Form dicker Filme.**

(30) Priorität: **02.08.86 DE 3626341**

(43) Veröffentlichungstag der Anmeldung:
**24.02.88 Patentblatt 88/08**

(45) Bekanntmachung des Hinweises auf die
Patenterteilung:
**25.04.90 Patentblatt 90/17**

(84) Benannte Vertragsstaaten:
**DE FR GB IT SE**

(56) Entgegenhaltungen:
**EP-B-0 099 055**
**GB-A-2 022 617**
**GB-A-2 116 213**

(73) Patentinhaber: **VARTA Batterie
Aktiengesellschaft
Am Leineufer 51
D-3000 Hannover 21 (DE)**

(72) Erfinder: **Bittihn, Rainer, Dr. Dipl.-Phys.
Königsberger Strasse 34
D-6233 Kelkheim (DE)**
Erfinder: **Woeffler, Friedrich
Am Nesselberg 2
D-6384 Schmitten (DE)**

(74) Vertreter: **Kaiser, Dieter Ralf, Dipl.-Ing.
Gundelhardtstrasse 72
D-6233 Kelkheim/Ts. (DE)**

EP 0 256 236 B1

**Beschreibung**

Die Erfindung betrifft ein Verfahren zur Herstellung von elektrisch leitfähigen organischen Polymerverbindungen von polykonjugierter Struktur als Elektrodenmaterialien in wiederaufladbaren galvanischen Elementen, die filmartig aus einer wässrigen oder organischen Lösung des Monomeren bei gleichzeitiger Gegenwart von Leitsalzen durch anodischen Strom auf einer elektronisch leitfähigen Oberfläche abgeschieden werden.

Von einer Reihe Polymerverbindungen, die unter Aufnahme von positiven oder negativen Ionen anorganischer Salze zu reversibler Oxidation und Reduktion befähigt sind, ist es seit längerem bekannt, daß sie als entladbares und wiederaufladbares Elektrodenmaterial in elektrochemischen Zellen eingesetzt werden können.

Im Hinblick auf diese interessante batterietechnische Anwendung ist ihre Herstellung auf dem Wege der Elektropolymerisation besonders zweckmäßig, die darin besteht, daß das Polymer durch einen anodischen Strom aus einer wässrigen oder organischen Lösung des entsprechenden Monomeren auf einem geeigneten Träger abgeschieden wird. Während der Polymerisation werden zur Aufrechterhaltung der Elektroneutralität des in diesem Fall positiv dotierten Polymers Anionen des gleichzeitig in der Lösung vorhandenen Leitsalzes in das Abscheidungsprodukt mit eingebaut.

Die EP-OS 166 980 beschreibt die Herstellung eines leitfähigen Polypyrrols sowie einiger Pyrrol-Copolymere nach diesem Verfahrensprinzip. Gemäß EP-OS 99055 kann die Elektrolyse auch kontinuierlich betrieben werden, indem man als Anode eine Zylinderwalze, die nur teilweise in die Elektrolytlösung eintaucht, rotieren läßt und von deren Oberfläche das abgeschiedene aktive Material als endlose Filmbahn laufend abzieht.

Nach Einbau des Polymerisats in eine galvanische Zelle, lassen sich die bei der Polymerisation aufgenommenen Salzanionen reversibel aus- und wieder einlagern. Allerdings hängt die Geschwindigkeit, mit der dies geschieht, von der Polymerfilmdicke ab, woraus folgt, daß ein dicker Film mit einer entsprechend hohen Kapazität nur mit kleinen Strömen geladen und entladen werden darf, wenn sein Ladungsinhalt voll umgesetzt werden soll.

In der deutschen Patentanmeldung P 36 07 378.4 ist daher bereits vorgeschlagen worden, anstelle einer kompakten Polymerfolie gegebener Dicke eine Folie aus mehreren dünnen Filmschichten in Stapelanordnung zu verwenden, die als Elektrode eine bessere Ausnutzung der flächenspezifischen Kapazität, d.h. eine größere Strombelastbarkeit bei gleichem Ladungsumsatz, erlaubt.

Der Erfindung liegt daher die Aufgabe zugrunde, ein Harstellungsverfahren für Polymerelektroden anzugeben, mit dem es möglich ist, euch dicke Kompaktfilme mit einer günstigen Elektrodenkinetik zu fertigen.

Die Aufgabe wird erfindungsgemäß mit den im kennzeichnenden Teil des Anspruchs 1 angegebenen Mitteln gelöst.

Die erfindungsgemäße Maßnahme wird aus den schematischen Darstellungen der Figuren 1, 2 und 3 deutlich.

Figur 1 zeigt mit den Teilfiguren a) und b) den zeitlichen Verlauf einer Elektropolymerisation nach herkömmlicher Art.

Figur 2 zeigt mit den Teilfiguren a) und b) den Polymerisationsverlauf bei erfindungsgemäßer Verfahrensführung.

Figur 3 zeigt mit den Teilfiguren a) und b) den Polymerisationsverlauf bei einer Variante der erfindungsgemäßen Verfahrensführung.

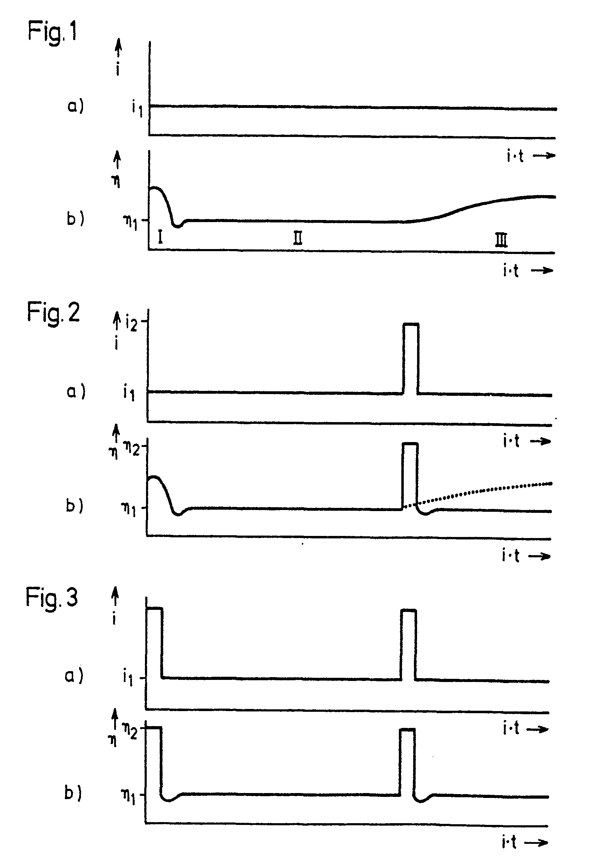

Nach Figur 1, Teilfigur a), ist bei galvanostatischer Führung der Elektropolymerisation mit dem gewählten Grundstrom $i_1$ die enstandene Polymerisationsmenge der jeweils bis zum Zeitpunkt t aufgewendeten Ladungsmenge proportional, nämlich gleich dem Zeitintegral $i_1 \cdot t$.

Man erhält dabei gemäß Teilfigur b) einen Potentialverlauf, der am Anfang (Phase I), bedingt durch eine mit dem Ingangsetzen des Polymerisationsprozesses einhergehende hohe Abscheidungspolarisation, ein Potentialmaximum aufweist und welcher darauf in eine länger anhaltende Phase II mit dem konstanten, niedrigen Potential $\eta_1$ übergeht.

Es konnte beobachtet werden, daß während dieses Zeitabschnitts II verhältnismäßig dünne Polymerschichten mit einer sehr günstigen Kinetik entstehen.

In einer folgenden Polymerisationsphase III überschreitet die Filmdicke jedoch Ausmaße, die einen Wiederanstieg der Polymerisationsspannung zur Folge haben. Polymerfilme aus dieser Phase sind mit dem Mangel verminderter Ladungsaufnahme und -abgabe bei höheren Strömen behaftet, ihre hohe flächenspezifische Kapazität ist also nur beschränkt nutzbar.

Die Phasen I, II und III könnten das Kristallisationsverhalten des Polymeren widerspiegeln. So schließt sich an eine keimbildende, mit hoher Überspannung behaftete Phase I eine Phase gleichmäßigen Kristallwachstums an (Phase II), die ihrerseits von einem Zusammenwachsen der zunächst "isolierten" Kristalle zu einer "glatten" Fläche gefolgt wird (Phase III).

Überraschenderweise und erfindungsgemäß lassen sich nun Polymerfilme mit gutem kinetischen Verhalten gewinnen, wenn man dem Grundstrom mindestens einmal einen kurzen Stromstoß aufprägt, dessen Stärke diejenige des Grundstromes um ein Mehrfaches übertrifft. Die Polymerisation wird anschließend mit dem ursprünglich gewählten niedrigen Grundstrom $i_1$ fortgesetzt. Figur 2 gibt in Teilfigur a) einen solchen Stromstoß von der Stärke $i_2$ als Rechteckimpuls wieder. An der Abscheidungsanode erzeugt dieser Stromstoß einen entsprechenden Spannungsstoß, bei dem gemäß Teilfigur b) das Grundpotential $\eta_1$ auf den Betrag $\eta_2$ angehoben ist.

Mit besonders günstiger Wirkung wird der Stromstoß immer dann ausgelöst bzw. wiederholt, wenn das Grundpotential $\eta_1$ merklich ansteigt und damit den Beginn der Polymerisationsphase III (gestrichelte Linie) signalisiert.

Die Dauer der hohen Stromstoßbelastung der Abscheidungsanode sollte im Minutenbereich, vorzugsweise bei ca. einer Minute, liegen. Dabei ist die Stromstärke so bemessen, daß sie mindestens des Zweifache, vorzugsweise jedoch das Acht- bis Zwölffache, beispielsweise das Zehnfache der Grundstromstärke beträgt.

Mit der Zurücknahme der Stromstärke von $i_2$ auf $i_1$ stellt sich im weiteren Verlauf der Polymerisation und für längere Zeit die vordem während der Phase II beobachtete niedrige Polymerisationsspannung $\eta_1$ wieder ein.

Erfindungsgemäß kann das Grundpotential $\eta$, sobald es erneut anzusteigen beginnt und damit ein Indiz für die Verschlechterung der kinetischen Eigenschaften des Abscheidungsmaterials liefert, durch einen weiteren Stromstoß wieder herabgesetzt werden. Durch sukzessives Wiederholen dieser Maßnahme wird gewährleistet, daß der überwiegende Anteil des Polymerisats bei einem möglichst niedrigen Potential entsteht und daß dieser Anteil folglich die gewünschte Eiganschaft einer hohen und von der Belastung weitgehend unabhängigen flächenspezifischen Kapazität besitzt.

Die Sequenz der Stromstöße kann auch monoton sein, d.h. wiederholte Stromstöße können mit konstanten Zeitinvervallen aufeinander folgen.

Eine weitere Variante des erfindungsgemäßen Verfahrens ist schließlich in der Figur 3 dargestellt. Bei dieser wird — unabhängig von der Zahl und Zeitwahl der während des gesamten Abscheidungsprozesses anzuwendenden Stromstöße — ein Stromstoß gleich zu Beginn des Stromflusses erzeugt, d.h. die Elektropolymerisation mit einem Stromstoß in Gang gesetzt. Die mit diesem Stromstoß $i_2$ korrespondierende Spannungspitze $\eta_2$ überlagert die sonst an dieser Stelle auftretende Anfangspolarisation, wobei ihre Höhe jedoch den ggfs. nachfolgenden Spannungsbeaufschlagungen der Polymerisationsanode dem Betrage nach gleichkommt.

Mit besonders gutem Erfolg im Sinne eines Elektrodenmaterials von der gewünschten schnellen Kinetik lassen sich Filme aus Polypyrrol, Polythiophen oder Polyfuran nach dem erfindungsgemäßen Verfahren herstellen.

Bei der Durchführung des Verfahrens kann die Regelung der Abscheidungsbedingungen sowohl galvanostatisch als auch potentiostatisch erfolgen, vorzugsweise wird eine galvanostatische Regelung gewählt.

**Patentansprüche**

1. Verfahren zur Herstellung von elektrisch leitfähigen organischen Polymerverbindungen von polykonjuglerter Struktur als Elektrodenmaterialien in wiederaufladbaren galvanischen Elementen, die filmartig aus einer wässrigen oder organischen Lösung des Monomeren bei gleichzeitiger Gegenwart von Leitsalzen durch anodischen Strom auf einer elektronisch leitfähigen Oberfläche abgeschieden werden, dadurch gekennzeichnet, daß dem für die Abscheidung gewählten Grundstrom mindestens ein kurzer Stromstoß, dessen Stärke diejenige des Grundstromes um ein Mehrfaches übertrifft, aufgeprägt wird.

2. Verfahren nach Anspruch 1, dadurch gekennzeichnet, daß die Polymerabscheidung mit einem Stromstoß beginnt.

3. Verfahren nach den Ansprüchen 1 und 2, dadurch gekennzeichnet, daß wiederholte Stromstöße in konstanten Zeitabständen aufeinander folgen.

4. Verfahren nach den Ansprüchen 1 bis 2, dadurch gekennzeichnet, daß ein erneuter Stromstoß immer dann erfolgt, wenn das Potential an der Abscheidungsanode ansteigt.

5. Verfahren nach einem der Ansprüche 1 bis 4, dadurch gekennzeichnet, daß die Dauer der Stromstöße im Minutenbereich liegt.

6. Verfahren nach einem der Ansprüche 1 bis 5, dadurch gekennzeichnet, daß die Stärke der Stromstöße mindestens das Zweifache, vorzugsweise jedoch das Acht- bis Zwölffache des Grundstromes beträgt.

7. Verfahren nach einem der Ansprüche 1 bis 6, dadurch gekennzeichnet, daß die Polymerverbindungen Polypyrrol, Polythiophen oder Polyfuran sind.

8. Verfahren nach einem der Ansprüche 1 bis 7, dadurch gekennzeichnet, daß Grundstrom und Stromstöße galvanostatisch geregelt werden.

**Revendications**

1. Procédé pour la fabrication de composés organiques polyères électriquement conducteurs et de structures polyconjuguées, utilisables en tant que matériaux d'électrodes dans des éléments galvaniques rechargeables et qui sont déposés sous forme de films par l'intermédiaire d'un courant anodique sur une surface électroniquement conductrice, à partir d'une solution aqueuse ou organique du monomère avec présence simultanée de sels conducteurs, procédé caractérisé en ce que, sur le courant de base choisi pour le dépôt est empreint au moins une impulsion de courant de courte durée dont l'intensité est supérieure d'un multiple à celle du courant de base.

2. Procédé selon la revendication 1, caractérisé en ce que le dépôt de polymère débute par une impulsion de courant.

3. Procédé selon les revendications 1 et 2, caractérisé en ce que des impulsions de courant répétées se succèdent à des intervalles de temps constants.

4. Procédé selon les revendications 1 à 3, caractérisé en ce qu'une nouvelle impulsion de courant se produit toujours lorsque le potentiel à l'anode de dépôt augmente.

5. Procédé selon une des revendications 1 à 4, caractérisé en ce que la durée des impulsions de courant se situe dans le domaine des minutes.

6. Procédé selon une des revendications 1 à 5, caractérisé en ce que l'intensité des impulsions de courant est au moins deux fois, mais de préférence huit à douze fois, celle du courant de base.

7. Procédé selon une des revendications 1 à 6, caractérisé en ce que les composés polymères sont le polypyrrol, le polythiophène ou le polyfurane.

8. Procédé selon une des revendications 1 à 7, caractérisé en ce que le courant de base et les impulsions de courant sont réglés galvanostatiquement.

## Claims

1. Process for manufacturing electroconductive organic polymeric compounds of polyconjugated structure for use as electrode materials in rechargeable galvanic elements, which polymeric compounds are deposited film-like on an electroconductive surface by means of anodic current from an aqueous or organic solution of the monomer with the simultaneous presence of conducting salts, characterized in that at least one short current surge whose strength is several times more than that of the fundamental current is impressed on the fundamental current selected for the deposition.

2. Process according to Claim 1, characterized in that the polymer deposition begins with a current surge.

3. Process according to Claims 1 and 2, characterized in that the repeated current surges follow one another at constant time intervals.

4. Process according to Claims 1 to 2, characterized in that a new current surge always takes place when the potential at the deposition anode rises.

5. Process according to one of Claims 1 to 4, characterized in that the duration of the current surges lies in the minutes range.

6. Process according to one of Claims 1 to 5, characterized in that the strength of the current surges is at least double, preferably however 8 to 12 times that of the fundamental current.

7. Process according to one of Claims 1 to 6, characterized in that the polymeric compounds are polypyrrole, polythiophene or polyfuran.

8. Process according to Claims 1 to 7, characterized in that the fundamental current and current surges are galvanostatically controlled.

Fig.1

Fig.2

Fig.3

1